# FASCICULE DE BREVET EUROPEEN

(11) **EP 4 108 977 B1**
(45) Date de publication et mention de la délivrance du brevet: **05.11.2025**
(21) Numéro de dépôt: 22179146.0
(22) Date de dépôt: 15.06.2022
(51) Int. Cl.: F17C 3/08

(54) **DISPOSITIF DE STOCKAGE ET DE TRANSPORT DE GAZ LIQUÉFIÉ**
LAGER- UND TRANSPORTVORRICHTUNG FÜR FLÜSSIGGAS
DEVICE FOR STORING AND TRANSPORTING LIQUEFIED GAS

(30) Priorité: 22.06.2021 FR 2106608
(43) Date de publication de la demande: 28.12.2022
(73) Titulaire: L'Air Liquide, Société Anonyme pour l'Etude et l'Exploitation des Procédés Georges Claude, 75007 Paris (FR); Cryolor Société Anonyme, 57640 Argancy (FR)
(72) Inventeur: VARRASSI, Lucien, 57640 ARGANCY (FR); FAISANDIER, David, 38360 SASSENAGE (FR)
(74) Mandataire: Air Liquide

(56) Documents cités:
- WO-A1-2019/170981
- JP-A- S61 248 403
- US-A- 2 926 810

## Description

L'invention concerne un dispositif de stockage et de transport de gaz liquéfié, notamment de fluide cryogénique tel que de l'hélium ou de l'hydrogène.

L'invention concerne plus particulièrement un dispositif de stockage et de transport de gaz liquéfié, notamment de fluide cryogénique tel que de l'hélium ou de l'hydrogène, comprenant un premier réservoir interne s'étendant selon une direction longitudinale et destiné à stocker le gaz liquéfié, un second réservoir externe disposé autour du premier réservoir avec un espacement isolé sous vide entre le premier et le second réservoir, le dispositif comprenant un système de maintien du premier réservoir dans le second réservoir, ledit système de maintien comprenant une première liaison rigide, par exemple par soudage, entre le premier réservoir et le second réservoir au niveau d'une première extrémité longitudinale du dispositif, et, à une seconde extrémité longitudinale du dispositif, un mécanisme de suspension du premier réservoir dans le second réservoir, le mécanisme de suspension comprenant un ensemble de tirants reliant le premier réservoir au second réservoir via des fourreaux fixés de façon rigide respectivement au premier réservoir et au second réservoir, une première extrémité des tirants étant fixée à un fourreau solidaire du premier réservoir via un ensemble de rondelle(s) et écrou montés autour du tirant, une seconde extrémité des tirants étant fixée à un fourreau solidaire du second réservoir via un ensemble de rondelle(s) et écrou montés autour du tirant, chaque écrou étant vissé sur une extrémité du tirant et serrant l'ensemble de rondelle(s) contre le fourreau, les tirants étant inclinés par rapport à un axe perpendiculaire à la direction longitudinale, le dispositif comprenant un mécanisme de réglage de la position d'au moins une extrémité d'un tirant relativement à son ou ses fourreau(x) avant fixation rigide du tirant au niveau du fourreau.

L'invention concerne en particulier les réservoirs ou conteneurs (notamment conteneurs ISO) horizontaux fixes ou mobiles (par exemple transportés par camions) pour le transport de fluides (gaz ou liquides cryogéniques notamment).

Lors de la fabrication d'un tel dispositif, l'ajustement des éléments de liaison (suspension) doit être réalisé à chaud (réservoir non rempli) de manière précise avant soudage pour ne pas favoriser des entrées de chaleur qui nuiraient aux performances thermiques.

Dans les dispositifs connus, l'ajustement des positions et orientations finales des tirants de suspension du réservoir intérieur est malaisé. Dans certains cas, le soudage d'une première extrémité longitudinale des réservoirs peut provoquer par exemple des contacts néfastes entre les tirants et leur fourreau au niveau de l'autre extrémité longitudinale (seconde extrémité). Des contractions supplémentaires sont générées lorsque le réservoir est mis en froid. Ces contractions peuvent être variables en fonction des paramètres du soudage des pièces assemblées.

Un exemple de dispositif est divulgué dans le document WO 2019/170981.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le mécanisme de réglage comprend un système de positionnement dans lequel au moins une extrémité du fourreau au contact d'un ensemble de rondelle(s) et ledit ensemble de rondelle (s) ont des formes conjuguées configurées pour permettre un positionnement transversal de l'ensemble de rondelle(s), du tirant et de l'écrou par rapport au fourreau dans une position déterminée par rapport au fourreau lors d'un montage de l'ensemble et avant fixation rigide du tirant au niveau du fourreau dans ladite orientation, les formes conjuguées du système de positionnement sont formées respectivement au niveau de l'extrémité du fourreau au contact de l'ensemble de rondelle (s) et au niveau de l'ensemble de rondelle(s), les formes conjuguées comprenant au moins une encoche et au moins une excroissance complémentaire et reçue dans l'encoche, l'encoche et l'excroissance étant configurées pour assurer un guidage du mouvement de l'ensemble de rondelle(s), le tirant et l'écrou transversalement par rapport au fourreau.

Dans les exemples illustrés, les deux extrémités des tirants sont fixées respectivement aux deux réservoirs via ce système de fourreau(x), rondelle(s) et écrou. Cependant, une seule des extrémités des tirants peut être fixée ainsi à son réservoir.

Ainsi, l'une au moins des extrémités d'au moins une partie des tirants peut être fixée à son réservoir (premier ou second réservoir) via un fourreau solidaire dudit réservoir et un ensemble de rondelle(s) et écrou(s) montés autour du tirant et assurant le positionnement et le maintien de l'extrémité du tirant par rapport au réservoir.

Le système de liaison avec fourreau, rondelles, et écrou permet un positionnement déterminé du tirant (position angulaire du tirant) avant d'être fixé de façon rigide, par exemple par soudage (position angulaire figée).

Par ailleurs, des modes de réalisation de l'invention peuvent comporter l'une ou plusieurs des caractéristiques suivantes :
- l'ensemble de rondelle(s), le tirant et l'écrou appartenant au système de positionnement sont positionnables transversalement sur une distance de quelques millimètres par rapport au fourreau,
- les formes conjuguées du système de positionnement sont formées respectivement au niveau de l'extrémité du fourreau au contact de l'ensemble de rondelle(s) et au niveau de l'ensemble de rondelle(s), les formes conjuguées comprenant au moins une encoche et au moins une excroissance complémentaire et reçue dans l'encoche, l'encoche et l'excroissance étant configurées pour assurer un guidage du mouvement de l'ensemble de rondelle(s), le tirant et l'écrou transversalement par rapport au fourreau,

- l'ensemble de rondelle(s) comprend deux rondelles superposées entre l'écrou et le fourreau,
- les rondelle(s) sont composées de l'un au moins des matériaux parmi: acier inoxydable austénitique, acier inoxydable duplex, acier inoxydable ferritique, ou stratifié époxy,
- la première extrémité des tirants est fixée à un fourreau solidaire d'un col solidaire d'une extrémité du premier réservoir,
- l'ensemble de tirants comprend quatre, six ou huit tirants,
- le positionnement en rotation de l'ensemble de rondelle(s) autour du tirant de la liaison rotule est configuré pour modifier de quelques degrés l'orientation angulaire du tirant par rapport au fourreau.

L'invention peut concerner également tout dispositif alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

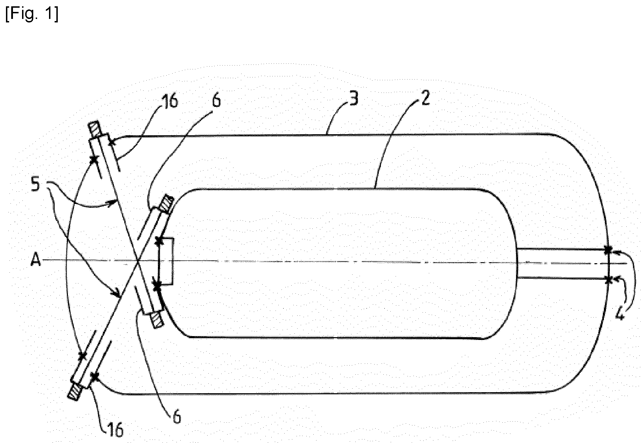

[Fig. 1] représente une vue en coupe longitudinale, schématique et partielle, illustrant la un exemple de structure du dispositif selon l'invention,
[Fig. 2] représente une vue en perspective, schématique et partielle, illustrant un détail du dispositif et en particulier au niveau d'une extrémité de tirants de suspension,
[Fig. 3] représente une autre vue en perspective, schématique et partielle, illustrant un détail du dispositif et en particulier au niveau d'une extrémité d'un tirant de suspension,
[Fig. 4] représente une autre vue de face, schématique et partielle, illustrant un détail d'une extrémité longitudinale du dispositif,
[Fig. 5] représente une autre vue en perspective, schématique et partielle, illustrant un détail du dispositif et en particulier une extrémité d'un fourreau destiné à accueillir un tirant de suspension.

Le dispositif 1 de stockage et de transport de gaz liquéfié illustré comprend un premier réservoir 2 interne, par exemple de forme générale cylindrique, s'étendant selon une direction A longitudinale. Cette direction A longitudinale est horizontale en position d'utilisation (réservoir de type horizontal).

Ce premier réservoir 2 interne est destiné à stocker le gaz liquéfié.

Un second réservoir 3 externe est disposé autour du premier réservoir 2 avec un espacement isolé sous vide entre le premier 2 et le second 3 réservoir.

Le dispositif 1 comprenant un système de maintien du premier 2 réservoir dans le second réservoir 3. Ce système de maintien comprend une première liaison 4 rigide, par exemple par soudage, entre le premier réservoir 2 et le second réservoir 3 au niveau d'une première extrémité longitudinale du dispositif 1. Par exemple, les deux extrémités adjacentes sont soudées 4 au moyen d'une pièce tubulaire tel qu'un col.

A une seconde extrémité longitudinale du dispositif 1, le dispositif comprend un mécanisme de suspension du premier réservoir 2 dans le second réservoir 3.

Ce mécanisme de suspension comprend un ensemble de tirants 5 reliant le premier réservoir 2 au second réservoir 3 via des fourreaux 6, 16 fixés de façon rigide respectivement au premier réservoir 2 et/ou au second réservoir 3. C'est-à-dire qu'en position de fixation rigide finale (par exemple soudée), les tirants sont figés dans une position (inclinaison) déterminée par rapport aux réservoirs.

Par exemple, le dispositif 1 comprend plusieurs tirants 5 dont les deux extrémités sont reliées à un des réservoirs via des fourreaux 6, 16.

Une première extrémité des tirants 5 est fixée à un fourreau 6 solidaire du premier réservoir 2 via un ensemble de rondelle(s) 7, 8 et écrou 9 montés autour du tirant 5. Le fourreau 6 est une pièce tubulaire qui est par exemple soudée au niveau d'un col 13 cylindrique solidaire à la seconde extrémité longitudinale du premier réservoir 2. Par exemple le col 13 est soudé à l'extrémité du premier réservoir 2.

La seconde extrémité des tirants 5 est fixée à un fourreau 16 solidaire du second réservoir 3 (par exemple le fourreau 16 est soudé au réservoir) via un ensemble de rondelle(s) 7, 8 et écrou 9 montés autour du tirant 5.

Chaque écrou 9 peut être vissé sur une extrémité taraudée du tirant 5 de façon à serrer l'ensemble de rondelle(s) 7, 8 contre le fourreau 6.

Les tirants 5 sont inclinés par rapport à un axe perpendiculaire à la direction longitudinale.

Selon une particularité avantageuse le dispositif 1 comprend un mécanisme permettant le réglage de la position d'au moins une extrémité d'un tirant 5 relativement à son ou ses fourreau(x) 6, 16 avant fixation rigide du tirant 5 au niveau du fourreau 6, 16.

Ce mécanisme de réglage comprend une liaison rotule et/ou un système de positionnement.

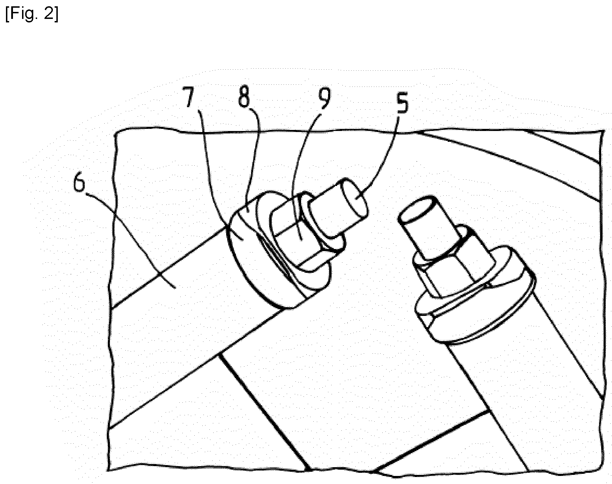

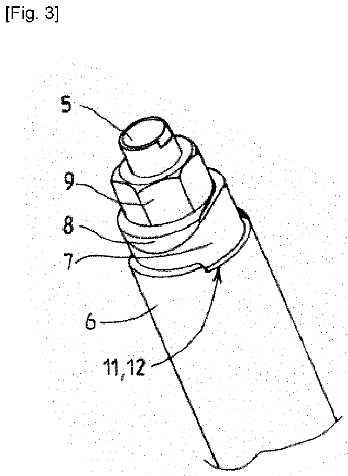

Comme visible à la [Fig. 2] ou à la [Fig. 3], la liaison rotule peut être formée par au moins une rondelle 8 de l'ensemble de rondelle(s) (7, 8) d'au moins une extrémité d'un tirant 5 possédant une épaisseur non uniforme mesurée selon la direction de l'axe du tirant 5. Cette épaisseur non uniforme forme une surface d'appui non plane constituant une liaison rotule au niveau de la liaison et autorisant ainsi, via un positionnement en rotation de la rondelle 7 dans une rainure de positionnement, une orientation angulaire du tirant 5 par rapport au fourreau 6. Ceci permet de régler finement l'orientation déterminée du tirant 5 lors d'un montage de l'ensemble et avant fixation rigide du tirant 5 (soudage) au niveau du fourreau 6 dans ladite orientation. Après positionnement, la position finale des tirants est figée par soudage de la rondelle 7 sur le fourreau 16.

Dans cet exemple non limitatif l'ensemble de rondelle(s) 7, 8 comprend deux rondelles superposées entre l'écrou 9 et le fourreau 6. Les rondelle(s) 7, 8 peuvent être composées de l'un au moins des matériaux parmi : acier inoxydable austénitique, acier inoxydable duplex, acier inoxydable ferritique, ou stratifié époxy.

Le système de positionnement peut être formé comme suit : à au moins une extrémité d'un tirant 5, l'extrémité du fourreau 6 au contact de l'ensemble de rondelle(s) 7, 8 et ledit ensemble de rondelle(s) 7, 8 ont de préférence des formes conjuguées 11, 12 configurées pour permettre un positionnement transversal de l'ensemble de rondelle(s) 7, 8, le tirant 5 et l'écrou 9 par rapport au fourreau 6. Ce positionnement (variable par exemple de quelques millimètres) permet de choisir une position déterminée du tirant 5 par rapport au fourreau 6 lors d'un montage de l'ensemble et avant fixation rigide (soudage) dans ladite orientation. En particulier ce système de positionnement permet de régler (avant de la figer) la position la position angulaire des tirants.

Ceci permet un réglage alternatif ou supplémentaire du mécanisme de suspension pour ajuster la position longitudinale des tirants par rapport notamment au réservoir 3 extérieur.

Ceci permet de régler l'angle et/ou la position des tirants 5 concernés.

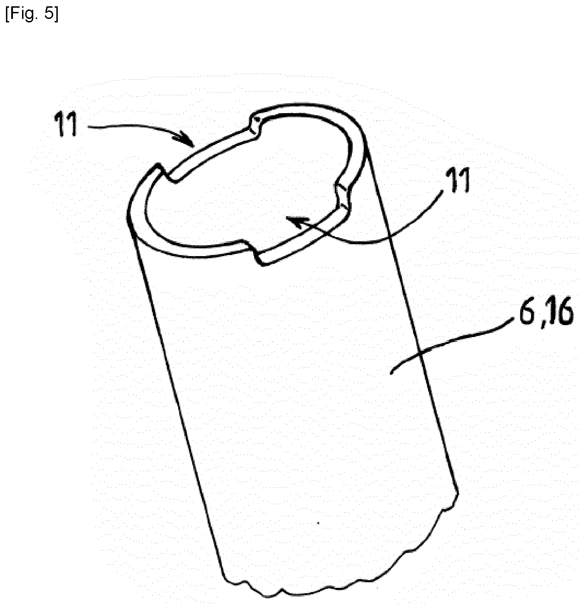

Un exemple de formes conjuguées 11, 12 est illustré à la [Fig. 3] et à la [Fig. 5]. Ces formes conjuguées sont situées respectivement au niveau de l'extrémité du fourreau 6 au contact d'une rondelle 7 et au niveau de cette rondelle 7. Comme illustré, ces formes conjuguées peuvent comprendre au moins une encoche 11 (ou découpe ou rainure), (par exemple au niveau du fourreau 6) et au moins une excroissance 12 complémentaire (par exemple au niveau de la rondelle 7) et qui est reçue dans l'encoche 11. Comme illustré à la [Fig. 5], l'extrémité du fourreau 6, 16 peut en particulier posséder deux encoches 11 situées de façon diamétralement opposée sur la bordure d'extrémité du fourreau 6, 16. Ceci forme un système de guidage selon la direction passant par les deux encoches 11.

Les encoches 11 et excroissances 12 sont configurées pour assurer un guidage du mouvement de l'ensemble de rondelle(s) 7, 8, le tirant 5 et l'écrou 9 transversalement par rapport au fourreau 6 et notamment selon la direction longitudinale A. Ceci permet également de choisir l'angle d'inclinaison adéquat après soudage 4 au niveau de la première extrémité du dispositif puis de souder cette seconde extrémité dans cette position adéquate.

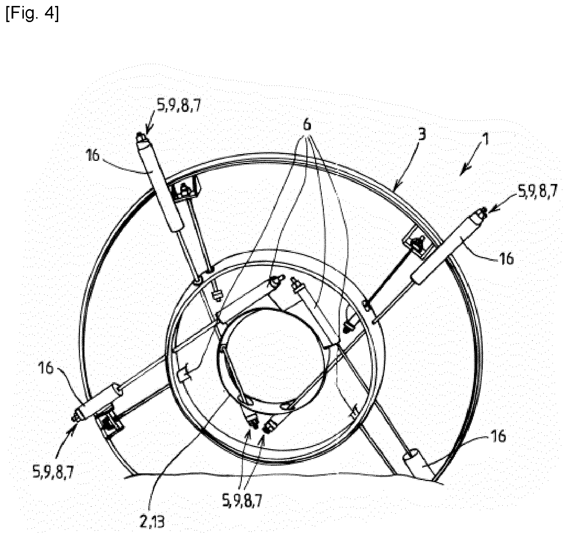

Bien entendu, alternativement ou cumulativement, le mécanisme de suspension peut comprendre des tirants dont l'une seulement des extrémités est reliée à un réservoir via un fourreau (cf. [Fig. 4]).

Dans l'exemple de la [Fig. 4] le mécanisme de suspension comprend quatre tirants 5 dont les deux extrémités sont reliées respectivement aux deux réservoirs via des fourreaux 6, 16. Ces quatre tirants 5 sont par exemple répartis de la façon suivante : une paire en partie supérieure et une autre paire en partie inférieure (par exemple avec un angle inférieur à 90 degrés entre les deux tirants d'une paire selon un plan transversal à la direction longitudinale et un angle supérieur à 90 degrés entre les deux tirants 5 adjacents des deux paires).

Dans cet exemple non limitatif, quatre tirants supplémentaires (non référencés) peuvent être prévus pour le maintien d'un écran thermique (non représenté en détail par souci de simplification) et ont une extrémité reliée à l'écran via des fourreaux et une autre extrémité reliée au réservoir 3 externe sans fourreau. Les tirants de suspension d'un tel écran thermique interposé entre les deux réservoirs 2, 3 peuvent posséder également un mécanisme de réglage décrit ci-dessus.

Le mécanisme de réglage décrit ci-dessus peut s'appliquer donc un ou plusieurs tirants et à une (intérieure/extérieure) ou les deux extrémités du ou des tirants 5. De même le nombre et l'orientation des tirants 5 n'est pas limitatif.

Bien entendu, l'invention n'est pas limitée à l'exemple décrit ci-dessus. Par exemple, le second réservoir 3 externe peut abriter plus d'un réservoir de fluide cryogénique et/ou d'autres composants et notamment un écran thermique interposé entre deux réservoirs.

## Revendications

1. Dispositif de stockage et de transport de gaz liquéfié, notamment de fluide cryogénique tel que de l'hélium ou de l'hydrogène, comprenant un premier réservoir (2) interne s'étendant selon une direction (A) longitudinale et destiné à stocker le gaz liquéfié, un second réservoir (3) externe disposé autour du premier réservoir (2) avec un espacement isolé sous vide entre le premier (2) et le second (3) réservoir, le dispositif (1) comprenant un système de maintien du premier (2) réservoir dans le second réservoir (3), ledit système de maintien comprenant une première liaison (4) rigide, par exemple par soudage, entre le premier réservoir (2) et le second réservoir (3) au niveau d'une première extrémité longitudinale du dispositif (1), et, à une seconde extrémité longitudinale du dispositif (1), un mécanisme de suspension du premier réservoir (2) dans le second réservoir (3), le mécanisme de suspension comprenant un ensemble de tirants (5) reliant le premier réservoir (2) au second réservoir (3) via des fourreaux (6, 16) fixés de façon rigide au premier réservoir (2) et/ou au second réservoir (3), une première extrémité et/ou une seconde extrémité des tirants (5) étant fixée à un fourreau (6, 16) solidaire du réservoir (2, 3) concerné via un ensemble de rondelle(s) (7, 8) et écrou (9) montés autour du tirant (5), chaque écrou (9) étant vissé sur une extrémité du tirant (5) et serrant l'ensemble de rondelle(s) (7, 8) contre le fourreau (6), les tirants (5) étant inclinés par rapport à un axe perpendiculaire à la direction longitudinale, le dispositif comprenant un mécanisme de réglage de la position d'au moins une extrémité d'un tirant (5) relativement à son ou ses fourreau(x) (6, 16) avant fixation rigide du tirant (5) au niveau du fourreau (6, 16), **caractérisé en ce que** le mécanisme de réglage comprend un système de positionnement dans lequel au moins une extrémité du fourreau (6, 16) au contact d'un ensemble de rondelle(s) (7, 8) et ledit ensemble de rondelle(s) (7, 8) ont des formes conjuguées (11, 12) configurées pour permettre un positionnement transversal de l'ensemble de rondelle(s) (7, 8), du tirant (5) et de l'écrou (9) par rapport au fourreau (6, 16) dans une position déterminée par rapport au fourreau (6, 16) lors d'un montage de l'ensemble et avant fixation rigide du tirant (5) au niveau du fourreau (6) dans ladite orientation, les formes conjuguées (11, 12) du système de positionnement sont formées respectivement au niveau de l'extrémité du fourreau (6) au contact de l'ensemble de rondelle(s) (7, 8) et au niveau de l'ensemble de rondelle(s) (7, 8), les formes conjuguées comprenant au moins une encoche (11) et au moins une excroissance (12) complémentaire et reçue dans l'encoche (11), l'encoche (11) et l'excroissance (12) étant configurées pour assurer un guidage du mouvement de l'ensemble de rondelle(s) (7, 8), le tirant (5) et l'écrou (9) transversalement par rapport au fourreau (6).

2. Dispositif selon la revendication 1, **caractérisée en ce que** l'ensemble de rondelle(s) (7, 8), le tirant (5) et l'écrou (9) appartenant au système de positionnement sont positionnables transversalement sur une distance de quelques millimètres par rapport au fourreau (6).

3. Dispositif selon la revendication 1 ou 2, **caractérisée en ce que** le mécanisme de réglage comprend une liaison rotule dans laquelle l'ensemble de rondelle(s) (7, 8) d'au moins une extrémité d'un tirant (5) possède une épaisseur non uniforme selon une direction parallèle à l'axe du tirant (5) formant ainsi une surface d'appui non plane et constituant la liaison rotule autorisant, via un positionnement en rotation de l'ensemble de rondelle(s) (7, 8) autour du tirant (5), une orientation angulaire déterminée du tirant (5) par rapport au fourreau (6, 16) et avant fixation rigide du tirant (5) au niveau du fourreau (6) dans ladite orientation,.

4. Dispositif selon l'une quelconque des revendications 1 à 3, **caractérisée en ce que** l'ensemble de rondelle(s) (7, 8) comprend deux rondelles superposées entre l'écrou (9) et le fourreau (6).

5. Dispositif selon la revendication 4, **caractérisée en ce que** les rondelle(s) (7, 8) sont composées de l'un au moins des matériaux parmi: acier inoxydable austénitique, acier inoxydable duplex, acier inoxydable ferritique, ou stratifié époxy.

6. Dispositif selon l'une quelconque des revendications 1 à 5, **caractérisée en ce que** la première extrémité des tirants (5) est fixée à un fourreau (6) solidaire d'un col (13) solidaire d'une extrémité du premier réservoir (2).

7. Dispositif selon l'une quelconque des revendications 1 à 6, **caractérisée en ce que** l'ensemble de tirants (5) comprend quatre, six ou huit tirants.

8. Dispositif selon la revendication 3 et éventuellement selon l'une quelconque des revendications 2, 4 à 7, **caractérisée en ce que** le mécanisme de réglage comprend le système de positionnement dans lequel le positionnement en rotation de l'ensemble de rondelle(s) (7, 8) autour du tirant (5) de la liaison rotule est configuré pour modifier de quelques degrés l'orientation angulaire du tirant (5) par rapport au fourreau avant la fixation rigide du tirant par rapport au fourreau.

9. Dispositif selon l'une quelconque des revendications 1 à 8 **caractérisée en ce que** les tirants sont fixés de façon rigide aux fourreaux (6, 16) par soudage.

## Patentansprüche

1. Vorrichtung zur Speicherung und zum Transport von Flüssiggas, insbesondere eines kryogenen Fluids wie Helium oder Wasserstoff, umfassend einen ersten inneren Behälter (2), der sich entlang einer Längsrichtung (A) erstreckt und zur Speicherung des Flüssiggases bestimmt ist, einen zweiten äußeren Behälter (3), der um den ersten Behälter (2) mit einem vakuumisolierten Abstand zwischen dem ersten (2) und dem zweiten (3) Behälter angeordnet ist, wobei die Vorrichtung (1) ein System zum Halten des ersten Behälters (2) im zweiten Behälter (3) umfasst, wobei das Haltesystem eine erste starre Verbindung (4), beispielsweise durch Schweißen, zwischen dem ersten Behälter (2) und dem zweiten Behälter (3) an einem ersten Längsende der Vorrichtung (1) umfasst, und an einem zweiten Längsende der Vorrichtung (1) einen Aufhängungsmechanismus des ersten Behälters (2) im zweiten Behälter (3), wobei der Aufhängungsmechanismus einen Satz von Zugstangen (5) umfasst, die den ersten Behälter (2) mit dem zweiten Behälter (3) über Hülsen (6, 16) verbinden, die starr am ersten Behälter (2) und/oder am zweiten Behälter (3) befestigt sind, wobei ein erstes Ende und/oder ein zweites Ende der Zugstangen (5) an einer Hülse (6, 16) befestigt ist, die mit dem betreffenden Behälter (2, 3) fest verbunden ist, über einen Satz von Unterlegscheibe(n) (7, 8) und Mutter (9), die um die Zugstange (5) montiert sind, wobei jede Mutter (9) auf ein Ende der Zugstange (5) geschraubt ist und den Satz von Unterlegscheibe(n) (7, 8) gegen die Hülse (6) spannt, wobei die Zugstangen (5) in Bezug auf eine zur Längsrichtung senkrechte Achse geneigt sind, wobei die Vorrichtung einen Mechanismus zur Einstellung der Position mindestens eines Endes einer Zugstange (5) relativ zu ihrer/ihren Hülse(n) (6, 16) vor der starren Befestigung der Zugstange (5) an der Hülse (6, 16) umfasst, **dadurch gekennzeichnet, dass** der Einstellmechanismus ein Positionierungssystem umfasst, bei dem mindestens ein Ende der Hülse (6, 16) in Kontakt mit einem Satz von Unterlegscheibe(n) (7, 8) und der genannte Satz von Unterlegscheibe(n) (7, 8) konjugierte Formen (11, 12) aufweisen, die so konfiguriert sind, dass sie eine transversale Positionierung des Satzes von Unterlegscheibe(n) (7, 8), der Zugstange (5) und der Mutter (9) in Bezug auf die Hülse (6, 16) in einer bestimmten Position in Bezug auf die Hülse (6, 16) während einer Montage des Satzes und vor der starren Befestigung der Zugstange (5) an der Hülse (6) in der genannten Ausrichtung ermöglichen, wobei die konjugierten Formen (11, 12) des Positionierungssystems jeweils auf Höhe des Endes der Hülse (6) in Kontakt mit dem Satz von Unterlegscheibe(n) (7, 8) und auf Höhe des Satzes von Unterlegscheibe(n) (7, 8) ausgebildet sind, wobei die konjugierten Formen mindestens eine Nut (11) und mindestens einen komplementären Vorsprung (12) umfassen, der in der Nut (11) aufgenommen ist, wobei die Nut (11) und der Vorsprung (12) so konfiguriert sind, dass sie eine Führung der Bewegung des Satzes von Unterlegscheibe(n) (7, 8), der Zugstange (5) und der Mutter (9) transversal zur Hülse (6) gewährleisten.

2. Vorrichtung nach Anspruch 1, **dadurch gekennzeichnet, dass** der Satz von Unterlegscheibe(n) (7, 8), die Zugstange (5) und die Mutter (9), die zum Positionierungssystem gehören, transversal über einen Abstand von einigen Millimetern in Bezug auf die Hülse (6) positionierbar sind.

3. Vorrichtung nach Anspruch 1 oder 2, **dadurch gekennzeichnet, dass** der Einstellmechanismus eine Kugelgelenkverbindung umfasst, bei der der Satz von Unterlegscheibe(n) (7, 8) von mindestens einem Ende einer Zugstange (5) eine ungleichmäßige Dicke entlang einer zur Achse der Zugstange (5) parallelen Richtung aufweist, wodurch eine nicht ebene Auflagefläche gebildet wird und die Kugelgelenkverbindung darstellt, die über eine Positionierung in Drehung des Satzes von Unterlegscheibe(n) (7, 8) um die Zugstange (5) eine bestimmte Winkelausrichtung der Zugstange (5) in Bezug auf die Hülse (6, 16) und vor der starren Befestigung der Zugstange (5) auf Höhe der Hülse (6) in der genannten Ausrichtung ermöglicht,.

4. Vorrichtung nach einem der Ansprüche 1 bis 3, **dadurch gekennzeichnet, dass** der Satz von Unterlegscheibe(n) (7, 8) zwei übereinanderliegende Unterlegscheiben zwischen der Mutter (9) und der Hülse (6) umfasst.

5. Vorrichtung nach Anspruch 4, **dadurch gekennzeichnet, dass** die Unterlegscheibe(n) (7, 8) aus mindestens einem der folgenden Materialien bestehen: austenitischer Edelstahl, Duplex-Edelstahl, ferritischer Edelstahl oder Epoxidlaminat.

6. Vorrichtung nach einem der Ansprüche 1 bis 5, **dadurch gekennzeichnet, dass** das erste Ende der Zugstangen (5) an einer Hülse (6) befestigt ist, die mit einem Bund (13) fest verbunden ist, der mit einem Ende des ersten Behälters (2) fest verbunden ist.

7. Vorrichtung nach einem der Ansprüche 1 bis 6, **dadurch gekennzeichnet, dass** der Satz von Zugstangen (5) vier, sechs oder acht Zugstangen umfasst.

8. Vorrichtung nach Anspruch 3 und gegebenenfalls nach einem der Ansprüche 2, 4 bis 7, **dadurch gekennzeichnet, dass** der Einstellmechanismus das Positionierungssystem umfasst, bei dem die Positionierung in Drehung des Satzes von Unterlegscheibe(n) (7, 8) um die Zugstange (5) der Kugelgelenkverbindung so konfiguriert ist, dass die Winkelausrichtung der Zugstange (5) in Bezug auf die Hülse um einige Grad geändert wird, bevor die Zugstange in Bezug auf die Hülse starr befestigt wird.

9. Vorrichtung nach einem der Ansprüche 1 bis 8, **dadurch gekennzeichnet, dass** die Zugstangen durch Schweißen starr an den Hülsen (6, 16) befestigt sind.

## Claims

1. A device for storing and transporting liquefied gas, in particular a cryogenic fluid such as helium or hydrogen, comprising a first inner tank (2) extending along a longitudinal direction (A) and intended to store the liquefied gas, a second outer tank (3) disposed around the first tank (2) with a vacuum-insulated spacing between the first (2) and second (3) tank, the device (1) comprising a system for supporting the first tank (2) in the second tank (3), said support system comprising a first rigid connection (4), for example by welding, between the first tank (2) and the second tank (3) at a first longitudinal end of the device (1), and, at a second longitudinal end of the device (1), a suspension mechanism for the first tank (2) in the second tank (3), the suspension mechanism comprising a set of tie rods (5) connecting the first tank (2) to the second tank (3) via sleeves (6, 16) rigidly fixed to the first tank (2) and/or to the second tank (3), a first end and/or a second end of the tie rods (5) being fixed to a sleeve (6, 16) integral with the concerned tank (2, 3) via a set of washer(s) (7, 8) and nut (9) mounted around the tie rod (5), each nut (9) being screwed onto an end of the tie rod (5) and tightening the set of washer(s) (7, 8) against the sleeve (6), the tie rods (5) being inclined with respect to an axis perpendicular to the longitudinal direction, the device comprising a mechanism for adjusting the position of at least one end of a tie rod (5) relative to its sleeve(s) (6, 16) before rigid fixing of the tie rod (5) at the level of the sleeve (6, 16), **characterized in that** the adjustment mechanism comprises a positioning system in which at least one end of the sleeve (6, 16) in contact with a set of washer(s) (7, 8) and said set of washer(s) (7, 8) have mating shapes (11, 12) configured to allow a transverse positioning of the set of washer(s) (7, 8), of the tie rod (5) and of the nut (9) with respect to the sleeve (6, 16) in a position determined with respect to the sleeve (6, 16) during an assembly of the set and before rigid fixing of the tie rod (5) at the level of the sleeve (6) in said orientation, the mating shapes (11, 12) of the positioning system are formed respectively at the level of the end of the sleeve (6) in contact with the set of washer(s) (7, 8) and at the level of the set of washer(s) (7, 8), the mating shapes comprising at least one notch (11) and at least one complementary protrusion (12) received in the notch (11), the notch (11) and the protrusion (12) being configured to ensure a guiding of the movement of the set of washer(s) (7, 8), the tie rod (5) and the nut (9) transversely with respect to the sleeve (6).

2. The device according to claim 1, **characterized in that** the set of washer(s) (7, 8), the tie rod (5) and the nut (9) belonging to the positioning system are positionable transversely over a distance of a few millimeters with respect to the sleeve (6).

3. The device according to claim 1 or 2, **characterized in that** the adjustment mechanism comprises a ball-and-socket joint in which the set of washer(s) (7, 8) of at least one end of a tie rod (5) has a non-uniform thickness along a direction parallel to the axis of the tie rod (5), thus forming a non-planar bearing surface and constituting the ball-and-socket joint authorizing, via a positioning in rotation of the set of washer(s) (7, 8) around the tie rod (5), a determined angular orientation of the tie rod (5) with respect to the sleeve (6, 16) and before rigid fixing of the tie rod (5) at the level of the sleeve (6) in said orientation, .

4. The device according to any one of claims 1 to 3, **characterized in that** the set of washer(s) (7, 8) comprises two washers superimposed between the nut (9) and the sleeve (6).

5. The device according to claim 4, **characterized in that** the washer(s) (7, 8) are composed of at least one of the materials from among: austenitic stainless steel, duplex stainless steel, ferritic stainless steel, or epoxy laminate.

6. The device according to any one of claims 1 to 5, **characterized in that** the first end of the tie rods (5) is fixed to a sleeve (6) integral with a collar (13) integral with an end of the first tank (2).

7. The device according to any one of claims 1 to 6, **characterized in that** the set of tie rods (5) comprises four, six or eight tie rods.

8. The device according to claim 3 and optionally according to any one of claims 2, 4 to 7, **characterized in that** the adjustment mechanism comprises the positioning system in which the positioning in rotation of the set of washer(s) (7, 8) around the tie rod (5) of the ball-and-socket joint is configured to modify by a few degrees the angular orientation of the tie rod (5) with respect to the sleeve before the rigid fixing of the tie rod with respect to the sleeve.

9. The device according to any one of claims 1 to 8, **characterized in that** the tie rods are rigidly fixed to the sleeves (6, 16) by welding.
